(19) **Europäisches Patentamt**

**European Patent Office**

**Office européen des brevets**

(11) **EP 0 839 071 B1**

(12) **EUROPEAN PATENT SPECIFICATION**

(45) Date of publication and mention
of the grant of the patent:
**09.04.2003 Bulletin 2003/15**

(51) Int Cl.[7]: **B01D 69/14**, B01D 61/36

(21) Application number: **96924491.2**

(86) International application number:
**PCT/US96/11672**

(22) Date of filing: **12.07.1996**

(87) International publication number:
**WO 97/003748 (06.02.1997 Gazette 1997/07)**

(54) **ADSORBENT FILLED MEMBRANES FOR REMOVAL OF VOLATILE COMPOUNDS FROM WASTEWATER**

MIT ADSORBIERENDEM MATERIAL GEFÜLLTE MEMBRANEN ZUR ENTFERNUNG FLÜCHTIGER VERBINDUNGEN AUS ABWASSER

MEMBRANES REMPLIES D'ADSORBANT, UTILISEES POUR ELIMINER LES COMPOSES ORGANIQUES VOLATILS DES EAUX USEES

(84) Designated Contracting States:
**AT BE CH DE DK ES FI FR GB GR IE IT LI LU MC NL PT SE**

(30) Priority: **14.07.1995 US 502873**

(43) Date of publication of application:
**06.05.1998 Bulletin 1998/19**

(73) Proprietor: **UNITED STATES ENVIRONMENTAL PROTECTION AGENCY**
**Washington, DC 20004 (US)**

(72) Inventors:
• **SIKDAR, Subhas, K.**
**Cincinnati, OH 45241 (US)**
• **JI, Wenchang**
**Natick, MA 01760 (US)**
• **HWANG, Sun-tak**
**Cincinnati, OH 45242 (US)**

(74) Representative: **Raffnsöe, Knud Rosenstand et al**
**Internationalt Patent-Bureau,**
**23 Höje Taastrup Boulevard**
**2630 Taastrup (DK)**

(56) References cited:
**EP-A- 0 254 758**          **US-A- 3 911 080**
**US-A- 4 061 724**          **US-A- 4 735 193**

• **JOURNAL OF MEMBRANE SCIENCE, vol. 35, no. 1, 15 December 1987, AMSTERDAM, THE NETHERLANDS, page 39-55 XP002016187 H.J.C. TE HENNEPE ET AL: "zeolite-filled silicone rubber membranes, part 1. membrane preparation and pervaporation results"**
• **DATABASE WPI Week 8328 Derwent Publications Ltd., London, GB; AN 83-708916 XP002016188 & JP,A,58 095 524 (KURARAY KK) , 7 June 1983**

## Description

### Field of the Invention

The present invention is directed to membranes for removing volatile organic compounds from wastewater.

### Background of the Invention

The major contaminants in industrial wastewater and ground water are volatile organic compounds, particularly chlorinated and aromatic hydrocarbons. Conventional separation technologies such as distillation and liquid-liquid extraction are not applicable due to the large volumes of the wastestreams. Currently, carbon adsorption and air stripping are widely used to remove volatile organic compounds. However, these two methods are economical only at low concentrations of volatile organic compounds, such as below 100 ppm, and limited to non-polar and relatively volatile (high Henry's law constant) volatile organic compounds, respectively. The need for frequent regeneration makes carbon adsorption economically unattractive for streams with high concentrations of volatile organic compounds. Post- treatments are required for air stripping to prevent a water pollution problem from becoming an air pollution problem.

As noted above, volatile organic compounds can be recovered from water or oil by absorption on hydrophobic adsorbents such as activated carbon [1-2]. Activated carbon has been used to remove chlorinated hydrocarbons from spilled industrial solvents and gasoline constituents from leaking underground storage tanks, to polish effluents from biological treatment processes, as well as to treat air emissions from air- stripping of groundwater and soil vacuum extraction [3]. These processes operate on adsorption-regeneration cycles. It has been demonstrated that carbonaceous adsorbents made by polymer pyrolysis can efficiently remove chlorinated hydrocarbons present in small amounts in water. However, these processes use discrete solid phase adsorbent pellets, and operate semi- continuously on adsorption-regeneration cycles. The need for frequent regenerations makes carbon adsorption economically unattractive for high concentrations of volatile organic compounds.

Pervaporation is a membrane method which can remove volatile organic compounds from wastewater continuously [4]. In pervaporation, sorption and diffusion determine the separation. In order to combine the advantages of high sorption capacity of microporous hydrophobic adsorbents with the continuous operation of membrane separation processes, a new type of membrane [5] was developed. These heterogeneous membranes consisted of a polymeric phase and adsorbent particles uniformly dispersed into a polymeric matrix. For instance, the performance of a silicone rubber membrane for separating alcohol from aqueous solution was enhanced by adding to the membrane an alcohol-selective molecular sieve such as hydrophobic zeolite [5]. Both selectivity and flux were improved according to the results obtained by Hennepe et al. [5]. Hydrophilic zeolite was used to facilitate water transport and to increase the selectivity of water over ethanol in separating ethanol-water azeotrope [6]. Higher oxygen permeability and $O_2/N_2$ selectivities were obtained for silicalite filled membranes than those without fillers [7]. Duval et al [8] studied the effect of adding carbon molecular sieves and various kinds of zeolites on the gas separation properties of polymeric membranes. They found that zeolites such as silicalite-1, 13X and KY improved the separation of $CO_2/CH_4$ mixtures by rubber polymers. On the other hand, zeolite 5A led to a decrease in permeability and unchanged selectivity. Carbon molecular sieve did not improve the separation performance, or only to a very small extent.

Most of the above-described studies were limited to molecular sieve materials such as zeolites, and to the separation of ethanol-water mixtures by pervaporation or gas separation. Moreover, pervaporation has heretofore proved to be impractical for use in treating wastewater because most of the reported studies were directed to elucidating the pervaporation operation, and were limited to one-component systems, such as toluene in water. Practical problems, however, invariably involve multi- component systems containing sometimes both polar and non-polar volatile organic compounds. Strategies for recovery for these multicomponent systems can be complex, especially if the volatile organic compounds are to be separated into the pure components for reuse.

### Summary of the Invention

It is an object of the present invention to overcome the aforementioned deficiencies in the prior art.

It is an object of the present invention to provide means for treating wastewater.

It is another object of the present invention to provide membranes for treating wastewater.

It is a further object of the present invention to provide absorbent-filled polymeric membranes for treating wastewater to remove volatile organic compounds.

It is yet another object of the present invention to recover volatile organic compounds from wastewater.

According to the present invention, pervaporation membranes are used for removing volatile organic compounds from wastewaters. These membranes were prepared by dispersing a hydrophobic adsorbent (filler) such as activated carbon uniformly into a polymer matrix. Any hydrophobic adsorbent can be used in pervaporation membranes according to the present invention, as long as the hydrophobic adsorbent has a very high surface area.

**Brief Description of the Drawings**

Figure 1 is SEM photographs of a PEBA membrane filled with 10 wt% of activated carbon, in cross section.
Figure 2 is a schematic of the purge and trap apparatus to determine the concentration of volatile organic compounds inside the membranes.
Figure 3 is a schematic of the desorption apparatus used to determine diffusion coefficient at zero concentration.
Figure 4 shows the trichloroethane and water fluxes vs. feed concentration for PEBA membrane filled with 5 wt% of activated carbon at 30°C.
Figure 5 shows trichloroethane and water fluxes vs. feed concentration of PEBA membrane filled with 5 wt% of carbonaceous adsorbent at 30°C.
Figure 6 shows sorption isotherms of trichloroethane from dilute aqueous solution into PEBA and its adsorbent-filled membranes at 30°C.
Figure 7 shows sorption isotherms of trichloroethane from dilute aqueous solution onto adsorbent in filled membranes at 30°C.
Figure 8 shows sorption of trichloroethane from dilute aqueous solution onto activated carbon in a filled PEBA membrane at 30°C.
Figure 9 shows sorption of water into adsorbent-filled membranes at 30°C.
Figure 10 shows diffusivity of trichloroethane in PEBA and its adsorbent-filled membranes at 30°C.
Figure 11 shows diffusivity of water in PEBA and its adsorbent-filled membranes at 30°C.
Figure 12 shows desorption kinetic curve for PBCA 10%- water system at 30°C.
Figure 13 shows diffusivity of trichloroethane and water in adsorbent-filled membranes at zero concentration at 30°C.
Figure 14 shows a pervaporation process for removal of volatile organic compounds from water without permeate recycle.
Figure 15 shows a pervaporation process for removal of volatile organic process from water with permeate recycle.
Figure 16 is a schematic of the test unit for pervaporation process.

**Detailed Description of the Invention**

According to the present invention, pervaporation membranes have been developed for enhanced removal of volatile organic compounds from wastewaters. These membranes comprise a hydrophobic adsorbent (filler) uniformly dispersed in a polymer matrix. The presence of the adsorbent in the membrane increased both the permeability of the volatile organic compounds and selectivity in the pervaporation process. Modification of membrane morphology by incorporating a hydrophobic filler such as activated carbon offers a simple and promising way of increasing the separation efficiency of pervaporation membranes. This modification can be implemented commercially very easily.

In general, the lower molecular weight organic compounds are the more volatile organic compounds to be removed from wastewater. Of course, the specific compounds to be removed will vary, depending upon the source of pollution. However, among the volatile organic compounds that can be removed by the process and membrane of the present invention include, but are not limited to, N,N-dimethylnitrosamine; chloroethane; benzoic acid; EDTA; benzene; cytosine; acrolein; methylene chloride; acrylonitrile; 1,1-dichloroethane; 1,1,1-trichloroethane; chloroform; 1,2-trans-dichloroethylene; 1,2-dichloroethane; diphenylamine; benzothiazole; 1,4-dichlorobenzene; p-chloro-m-cresol; 1,2-dichlorobenzene; naphthalene; 1,1-diphenylhydrazine; p-nitroaniline; 4-bromophenyl phenyl ether; 2,6-dinitrotoluene; pentachlorophenol; 2-naphthylamine; 2-chloroethyl vinyl ether; dibromochloromethane; 1,1-dichloroethylene; 5-fluorouracil; trichlorofluoromethane; 1,1,2-trichloroethane; 1,2-dichloropropane; cyclohexanone; dichlorobromomethane; 1,2-dichloropropene; 1,1,2,2-tetrachloroethane; benzo[ghi]perylene; uracil; bis(2-chloroethoxy)methane; carbon tetrachloride; bromoform; phenol; bis(2-chloroisopropyl)ether; N-nitrosodi-n-propylamine; 5-chlorouracil; toluene; thymine; trichloroethylene; isophorone; 2,4-dinitrophenol; benzo[a]pyrene; 5-bromouracil; o-anisidine; tetrachloroethylene; 2-chlorophenol; ethylbenzene; 1,2-dibromo-3-chloropropane; 3,4-benzofluoranthrene; nitrobenzene; dibenzo[a,h]anthracene; adenine; 1,2,3,4-tetrahydronaphthalene; acetophenone; 4-nitrophenol; 2,4-dimethylphenol; p-xylene; chlorobenzene; hexachloroethane; dimethylphthalate. The membranae material can be readily chosen by one skilled in the art to be non-reactive with the volatile organic compound to be removed.

The membranes of the present invention are very easy and convenient to use, and concentrate the volatile organic compounds by more than 100%, and in some cases as much as 2-3 thousand-fold. With removal using the membranes of the present invention, the volatile organic compounds can be reused.

The membranes of the present invention can be used to treat wastewater for removal of volatile organic compounds at room temperature, and the operation is a one-step operation. With the greater volume reduction of the volatile organic compounds, at least 100% improvement over prior membranes is obtained. Additionally, the volatile organic compounds can be recovered for re-use.

The membranes used in the present invention are made of polymers, the chemical structure of which range from simple hydrocarbons like polyethylene or polypropylene to polar structures like polyamides, or ionic structures in which cations or anions are attached to the backbone. The choice of polymer for the membrane is dictated by the types of volatile organic compounds which are to be removed from the wastewater.

More specifically, flat sheet membranes can be used, made of polymers filled with a hydrophobic adsorbent. Examples of such polymers include poly(dimethylsiloxane), polyether-block-polyamides, and silicon-polycarbonate copolymer membranes.

The hydrophobic adsorbent, which aids in removing the volatile organic compounds from wastewater, may be present in amounts ranging from about 1% to about 25% by weight. Among the hydrophobic adsorbents that may be used, in addition to activated carbon, are hydrophobic adsorbents with a very large surface area, such as carbonaceous adsorbents made by polymer pyrolysis, hydrophobic inorganic adsorbents having a very high surface area, such as hydrophobic zeolite-based adsorbents, hydrophobic molecular sieves, hydrophobic polymer resin adsorbents, and the like.

Among the polymers that can be used for the membrane matrix are rubbery polymers and copolymers such as polydimethyl siloxane, poly(1-trimethylsiliyl-1-propyne) polyurethanes, polybutadiene polyether block amide polymers (PEBA) and silicone/polycarbonate polymers, styrene butadiene rubber, nitrile butadiene rubber, ethene-propene terpolymer.

Two or more adsorbents can be mixed and included in the membrane, in'any desired ratio of adsorbents.

The following specific examples will further illustrate the principles of the present invention. These examples, however, are for purposes of illustration and not for limitation.

To illustrate pervaporation membranes according to the present invention, membranes were prepared by dispersing activated carbon hydrophobic adsorbent into a polymer matrix of polyether-block-polyamide (PEBA) polymer. Activated carbon in a PEBA membrane increased both the permeability of volatile organic compounds and selectivity in the pervaporation process.

## Membrane Preparation

The absorbent filled PEBA membranes were prepared by adding adsorbents to a 10-15 wt% solution of PEBA and casting the solution on a glass plate by a cast knife (Paul N. Gardner Co.). The membrane was first dried overnight at room temperature (23°C) and then in a vacuum oven at 50°C for at least 24 hours to remove residual solvent. Fine adsorbent particles of activated carbon were obtained by grinding the commercially available materials with a mill (Lartone, Inc., Seattle, WA). The PEBA (AutoChem, 3533) was dissolved in a solvent made of 1-butanol and 1-propanol in a 4:1 volume ratio. The solution was kept warm (50-55°C) overnight to eliminate air bubbles. During the drying process, the glass plate was covered by a funnel to minimize any turbulence which could cause membrane nonuniformity such as pin holes, or a wavy surface. After drying, the membrane was removed from the glass plate by a roller. Membranes of various thicknesses were prepared by this method. Homogeneous PEBA membranes were also prepared in a similar way for comparison.

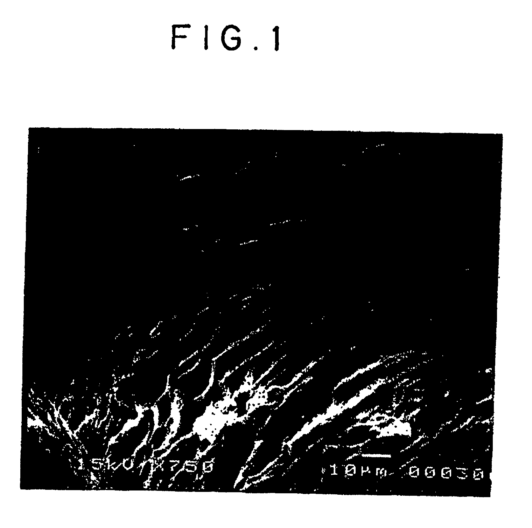

Scanning electron microscopy (SEM) was used to check the homogeneity of the particle dispersion. As shown in Figure 1, all adsorbent particles were well dispersed in the polymer phase.

## Permeation Results

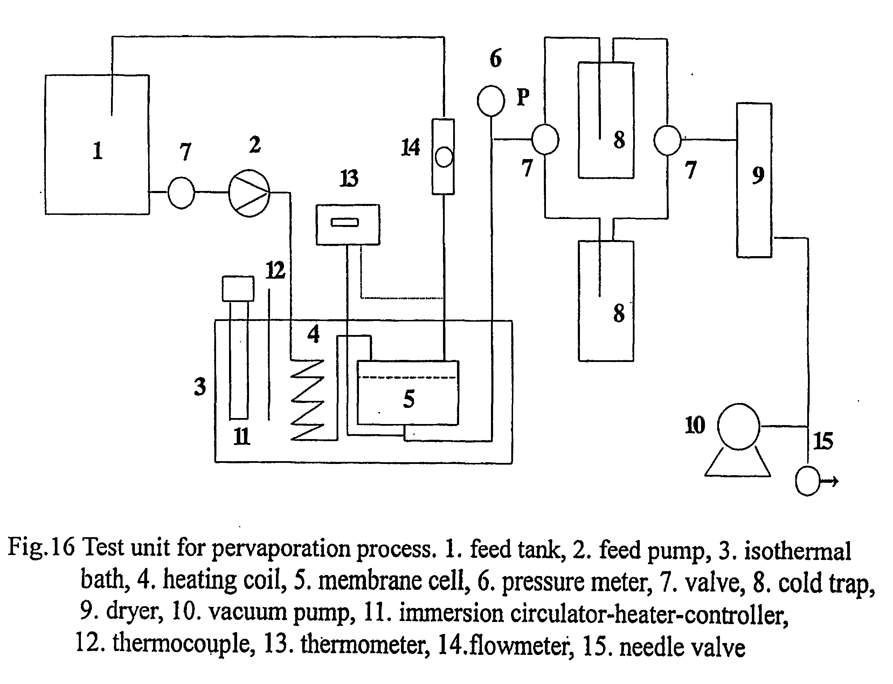

The membranes prepared for this evaluation were characterized by permeation experiments. The apparatus for pervaporation experiments has been described in detail elsewhere [4]. The schematic of the test unit is shown in Figure 16. The permeation fluxes were measured and used to calculate the membrane intrinsic permeability via a resistance-in- series model. The liquid boundary layer mass transfer coefficients determined by Ji et al., [4], were used in these calculations. Some of the experimental results for removing 1,1,1-trichloroethane (TCE) from dilute aqueous solutions are shown in Table 1

TABLE 1: Removal of TCE from water using adsorbent filled membranes (30°C, feed flowrate 990 ml/min., downstream pressure 0.09 mmHg)

| Membrane | PEBA | PBAC5% | PBAC10% |
|---|---|---|---|
| $Q_i{}^m$(mol-m/m$^2$-s-KPa) | $1.34 \times 10^{-9}$ | $1.82 \times 10^{-9}$ | $2.58 \times 10^{-9}$ |

TABLE 1: Removal of TCE from water using adsorbent filled membranes (30°C, feed flowrate 990 ml/min., downstream pressure 0.09 mmHg)   (continued)

| Membrane | PEBA | PBAC5% | PBAC10% |
|---|---|---|---|
| percent change of $Q_i^m$(%) | | 36 | 92 |
| $Q_w^m$(mol-m/m²-s-KPa) | 2.15x10⁻⁸ | 2.57x10⁻⁸ | 2.65x10⁻⁸ |
| percent change of $Q_w^m$(%) | | 19 | 23 |
| intrinsic separation factor | 1742 | 1984 | 2720 |
| percent change of sep. factor(%) | | 14 | 56 |

PBAC5%-PEBA membrane filled with 5 wt% activated carbon.
PBAC10%-PEBA membrane filled with 10 wt% activated carbon.
$Q_i^m$: intrinsic organic permeability.
$Q_w^m$: intrinsic water permeability.

## Theory

Determination of intrinsic membrane permeability

Intrinsic membrane permeabilities of organic compounds were determined using the resistance-in-series model [4].

$$\frac{l}{Q_i} = \frac{P_i^{sat}\gamma^\infty}{k_L\rho_L} + \frac{l}{Q_i^m} \tag{1}$$

Here, $Q_i$ is the overall organic permeability, $Q_i^m$ is the intrinsic membrane permeability, $l$ is the membrane thickness, $k_L$ is the liquid boundary layer mass transfer coefficient, $\rho_L$ is total feed molar volume concentration (mol/m³). For very dilute aqueous solutions, $\rho_L = 10^6/18$ mol/m³. $P_i^{sat}$ is the saturated vapor pressure of an organic compound. $\gamma_i^\infty$ is the activity coefficient at infinite dilution of an organic compound. The liquid boundary layer mass transfer coefficients determined by Ji et al. [4] were used in these calculations due to the same feed flow conditions.

For very dilute organic solutions, the boundary layer mass transfer resistance for water transport in pervaporation is assumed to be negligible. The intrinsic water permeability can be calculated from the permeation flux by the following equation [4] :

$$Q_w^m = \frac{J_w l}{P_w^{sat}} \tag{2}$$

where $J_w$ is the permeation flux for water $p_w^{sat}$ is the saturated vapor pressure of water.

For pervaporation of organic compounds from dilute aqueous solutions, permeation fluxes can be expressed as [4] :

$$J_i = \frac{Q_i^m(P_i^{sat}\gamma_i^\infty X_i P_i)}{l} \tag{3}$$

$$J_w = \frac{Q_w^m(P_i^{sat}-P_w)}{l} \tag{4}$$

where $J_i$ is the permeation flux of an organic compound. $x_i$ is the mole fraction of the organic compound in the feed (mol/mol), $p_i$ and $p_w$ are partial pressures of organic and water at downstream side of the membrane, respectively. When the downstream pressure is negligible, eqns. (3) and (4) can be simplified as:

$$J_i = \frac{Q_i^m P_i^{sat}\gamma_i^\infty X_i}{l} \tag{5}$$

$$J_w = \frac{Q_w{}^m P_w{}^{sat}}{l} \qquad (6)$$

If we assume constant diffusion coefficient and linear concentration distribution in the membrane, the permeation flux can be also represented by the following equations:

$$J_i = D_i \frac{dC_i}{dz} = \frac{D_i C_i}{l} = \frac{D_i K_i C_i}{l} = \frac{D_i K_i \rho_L X_i}{l} \qquad (7)$$

$$J_w = D_w \frac{dC_w}{dz} = \frac{D_w C_w}{l} = \frac{D_w K_w C_w}{l} = \frac{D_w K_w \rho_L X_w}{l} \qquad (8)$$

Here, D is the diffusion coefficient, C and c are concentrations in membrane and feed ($mol/m^3$) respectively. $x_w$ is the mole fraction of water in the feed, and $x_w \infty l.0$ for dilute aqueous solution. K's are the partition coefficient as defined by eqns. (9) and (10). The subscript "i" and "w" denote organic compound and water respectively.

$$K_i = \frac{C_i}{c_i} \qquad (9)$$

$$K_w = \frac{C_w}{c_w} \qquad (10)$$

Combining eqns. (7) and (8) with (5) and (6), gives eqns. (11) and (12):

$$D_i = \frac{Q_i{}^m P_i{}^{sat} \gamma_i{}^\infty}{K_i \rho_L} = \frac{Q_i{}^m H'_i}{K_i} \qquad (11)$$

$$D_i = \frac{Q_w{}^m P_w{}^{sat}}{K_w \rho_L} \qquad (12)$$

where $H'_i$ is Henry's law constant. Using eqns. (11) and (12), diffusion coefficients in the filled membrane can be calculated from the intrinsic permeability and the partition coefficient.

Equations (1) through (12) were used for membranes with and without adsorbent fillers to obtain effective permeabilities of heterogeneous adsorbent-filled membranes. The same theoretical treat as applied to unfilled polymeric membranes was used. By directly measuring solubility in filled membranes, effective diffusivities can be obtained from equations (11) and (12). The effects of adsorbent fillers on membrane performance can then be observed by comparing the effective permeability and the effective diffusivity of the filled membranes with those of unfilled membranes. Detailed theoretical analyses of sorption of 1,1,1- trichloroethane on filled membranes are given infra. Generally, a resistance-in-series model can be used to describe the filled membrane systems, as demonstrated by Te Hennepe et al [9] and Cussler [10].

Determination of diffusion coefficient from desorption experiments

If diffusion of a gas or liquid in membranes is Fickian, the desorption kinetic data can be analyzed for long duration with eqn. (13) [11].

$$\frac{dln(\frac{M_\infty - M_t}{M_\infty})}{dt} = - \frac{\pi^2 D^0}{l^2} \qquad (13)$$

where $D^\circ$ is the diffusivity at zero concentration, $M_i$ and $M_\infty$ are the amounts of liquid removed from the membrane at time t and at equilibrium, respectively. The $M_t$ and $M_\infty$, are related to the mass of the sample at different time by the following equations:

$$M_t = W_0 - W_t \tag{14}$$

$$M_\infty = W_0 - W_\infty \tag{15}$$

where $W_0$, $W_t$ and $W_\infty$ are the sample mass at time zero, t and at equilibrium respectively. $W_\infty$ is equal to the mass of dry membrane. Eqn. (13) can then be rewritten as:

$$\frac{d\ln\left(\dfrac{(W_t - W_\infty)}{W_0 - W_\infty}\right)}{dt} = -\frac{\pi^2 D^0}{l^2} \tag{16}$$

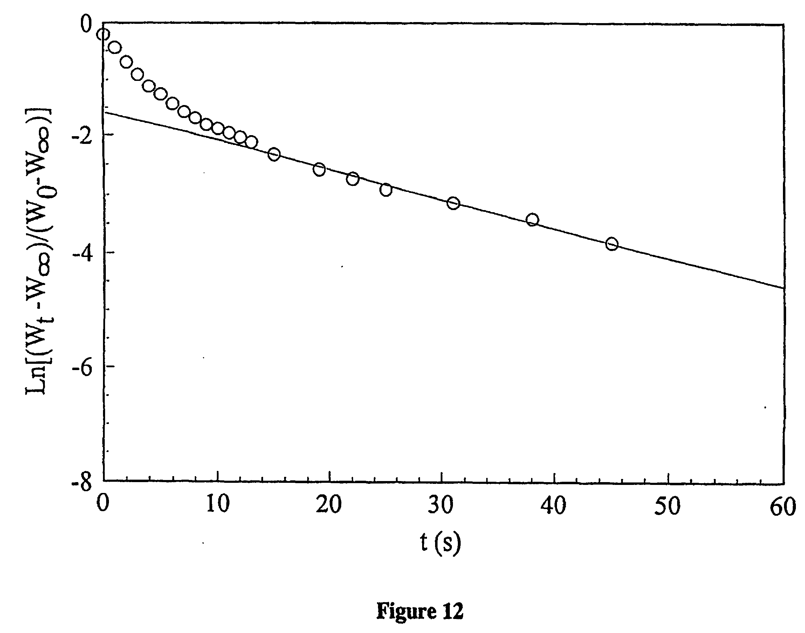

Eqn. (16) was used to calculate the diffusivity at zero concentration. The use of general desorption theory {equations (13) - (16)} for the filled membrane system is based on the following reason: we observed a similar desorption curve for the filled membrane as that for the unfilled membrane, which indicated that the rate-controlling step is Fickian diffusion (Fig. 12). Assigning effective diffusivities to the heterogeneous systems enabled us to analyze the filled membranes.

## Experimental

### Adsorbents and Polymers

The microporous adsorbents used in this study were powdered activated carbon WPX (Calgon Carbon Corporation, PA) and Ambsersorb 1500 carbonaceous adsorbents (Rohm and Haas Company, PA). WPX is produced from reactivated granular coal-based carbon. WPX has a high iodine number which allows for the adsorption of a wide range of organic chemicals. Ambersorb 1500 is made by pyrolysis of a highly sulfonated styrene/divinylbenzene macroreticular ion exchange resin. During pyrolysis, microporosity and mesoporosity increase while the macroreticular structure remains intact [12].

Pore volume, pore size distribution and BET surface area of both adsorbents were determined by nitrogen adsorption porosimetry (Micromeritices, ASAP 2000). The nitrogen adsorption method can measure the pore volume of pores up to 300 nm. the bulk density of the adsorbents was measured by mercury porosimetry. The results are listed in Table 2.

TABLE 2

| Physical properties of activated carbon (AC) and Ambersorb 1500 (CA) | | | | |
|---|---|---|---|---|
| adsorbent | surface area[a] ($m^2$/g) | density[b] (g/$cm^3$) | pore volume ($cm^3$/g) | |
| | | | <2.0 nm[a] | 2.0-300 nm[a] |
| AC | 904 | 0.7996 | 0.23 | 0.20 |
| CA | 1184 | 0.8530 | 0.39 | 0.45 |

[a] data from $N_2$ adsorption experiments.
[b] data from Hg porosimetry.

As can be seen from Table 2, both activated carbon and Ambersorb 1500 had a high surface area. Ambersorb 1500 had a more porous structure than activated carbon WPX. For example, the micropore volume of Ambersorb 1500 is almost twice as high as that of activated carbon.

Polyether-block-polyamide (PEBA) (AutoChem, NJ) was used as the polymer phase in the membrane systems described in these experiments, since the potential application of this membrane for removing volatile organic compounds has been amply demonstrated (4, 13, 14).

Membrane Preparation

The adsorbent-filled PEBA membranes were prepared by adding adsorbents to a 10-15 wt% PEBA solution in 1-butanol and 1-propanol in a 4:1 volume ratio and casting the suspension on a glass plate by a cast knife (Paul N. Gardner Co.). The membrane thus formed was first dried overnight at room temperature (23°C) and then dried in a vacuum oven (50°C) for at least 24 hours to remove any residual solvent. Fine adsorbent particles were obtained by grinding the commercialized materials in a mill (Lartone, Inc., Seattle, WA). Only the fraction of particles of either adsorbent that passed through 400 mesh U.S. Sieve Series screen size (38 µm) was used in membrane preparation. PEBA (AutoChem, 3533) was dissolved in a solvent made of 1-butanol and 1-propanol in 4:1 volume ratio. The solution was kept warn overnight to eliminate air bubbles. During drying, the glass plate was covered by a funnel to minimize air turbulence which could cause formation of pin holes and surface waves and make the membrane nonuniform. After drying, the membrane was removed from the glass plate by a roller. The membranes with various thicknesses (100-200 µm) were prepared by this method. The homogeneous PEBA membranes were also prepared in a similar way for comparison.

A scanning Electron Microscope was used to check the homogeneity of the particle dispersion. As shown in Figure 1, all of the adsorbent particles were well dispersed in the polymer phase.

Permeation, Sorption and Desorption Experiments

All of the membranes prepared for use in these experiments were characterized by permeation, sorption and desorption experiments. The apparatus for permeation experiments was described in Ji et al., [4]. The permeation fluxes were measured and used to calculate the membrane intrinsic permeability via the resistance-in-series model, equation (1).

Static sorption experiments from both pure liquids and liquid mixtures were performed. A "purge and trap" method was developed to determine the concentration of volatile organic compounds inside the membranes. Traditional methods such as distillation [15-17] and gravimetric [18] methods were difficult to apply to the current systems because of the very small amounts of volatile organic compounds present in membranes (i.e., in the order of $10^{-3}$ g/g), and these organics are easily lost from aqueous solutions because of their high Henry's law constants. The purge and trap method directly determined the volatile organic compounds sorbed in the membrane by gas chromatography while the quantity of sorbed water was determined by weighing.

Dried membrane samples were submerged in bottles containing pure liquids of aqueous volatile organic compound solutions, which were placed in a water bath maintained at a temperature of $30 \pm 0.05°C$. Mass uptake was monitored by removing the sample from the bottle, drying with a tissue paper to remove excess solution, and weighing the membrane sample. Equilibrium sorption was determined after a long time of submersion (at least 24 hours) until no further weight increase was observed.

For the liquid mixture, the amount of water in a swollen membrane was calculated from the total mass uptake and the amount of organic determined by the purge and trap method as described below.

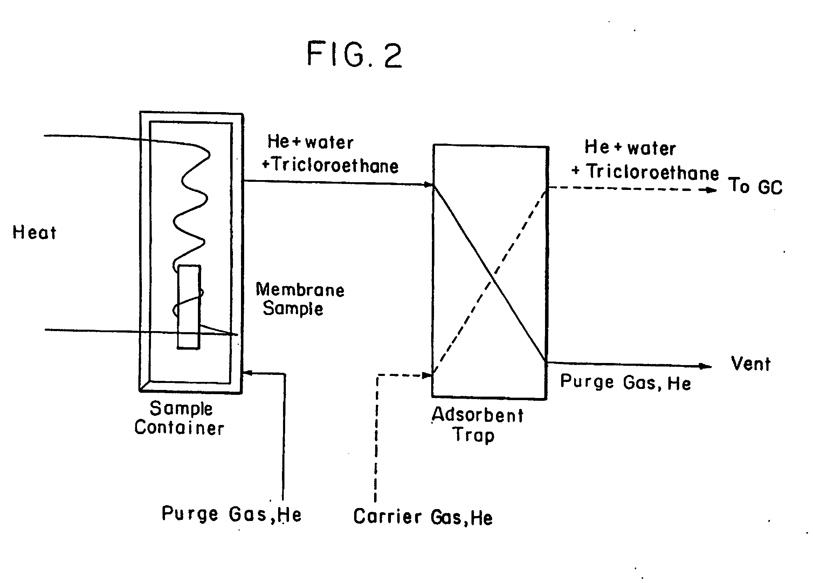

Figure 2 shows the purge and trap apparatus for determining the volatile organic compound sorption in membranes. After equilibration with an aqueous solution of volatile organic compounds, the membrane sample was placed into a sparge tube. Helium was used to remove volatile organic compounds from the sample. The sample was then heated up to 80°C in order to increase the rate of removal. Volatile organic compounds removed from the membrane sample were collected by an adsorbent trap. The purge trap contained Tenax and silica gel as specified in the EPA method 601, which is recommended by EPA for chlorinated hydrocarbon analysis. After collection, the trap was heated to release the volatile organic compounds which were brought by helium flow into the gas chromatograph. The amount of organics sorbed into the membrane was then determined by gas chromatography (Tracor Model 585, Tremetrice, TX). The relative error in the gas chromatography analysis for the membrane samples was estimated to be less than 5%. A Mettler microbalance (Mettler Instrument Corporation, Hightstown, NJ) was used to measure sample mass in the sorption experiments. A typical purge and trap condition is listed in Table 3. The purge time was determined in such a way that no volatile organic compound was detected by gas chromatography after the first run.

TABLE 3

| Operating parameters for the purge-trap method to determine VOC concentration inside membranes | |
| --- | --- |
| parameters | values |
| prepurge time (min) | 1.0 |
| preheat time (min) | 2.5 |

TABLE 3   (continued)

| Operating parameters for the purge-trap method to determine VOC concentration inside membranes | |
|---|---|
| parameters | values |
| purge flow rate (ml/min) | 40 |
| sample temperature (°C) | 80 |
| purge time (min) | 20 |
| desorp preheat temperature (°C) | 100 |
| desorp temperature (°C) | 180 |
| desorp time (min) | 4 |
| bake temperature (°C) | 225 |
| bake time (min) | 7 |

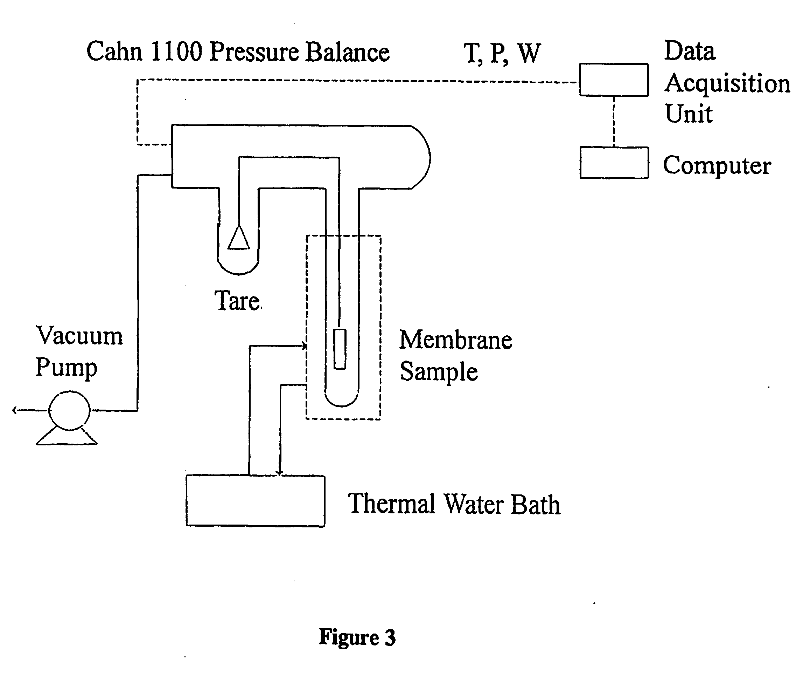

Figure 3 shows the schematic of the gravimetric desorption apparatus. A Cahn 1100 electrobalance was used to monitor the weight change. In order to control the desorption temperature, the hang-down tube was wrapped with a copper coil connected to the constant temperature water bath. After the membrane was equilibrated with the pure liquid and dried by a tissue paper to remove excess liquid, the membrane sample was placed in the pan inside the hang-down tube. The desorption was started by evacuating the system via a vacuum pump. The measured weight change, sample temperature and system pressure were stored in a computer via a data acquisition unit. These date were then used to calculate the diffusivity of volatile organic compounds and water in membranes at zero concentration.

Trichloroethane and Water Permeation through Adsorbent-filled PEBA Membranes

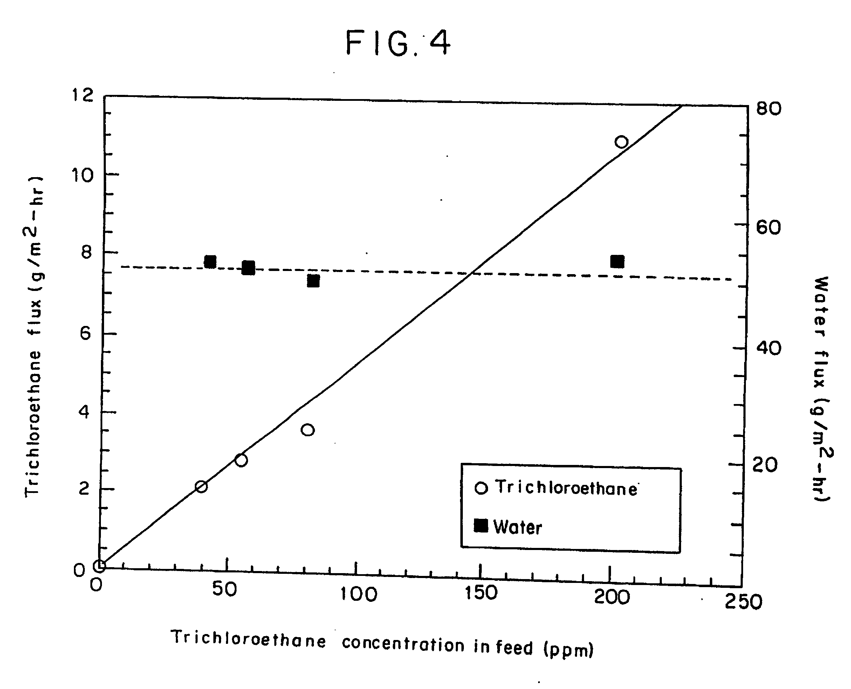

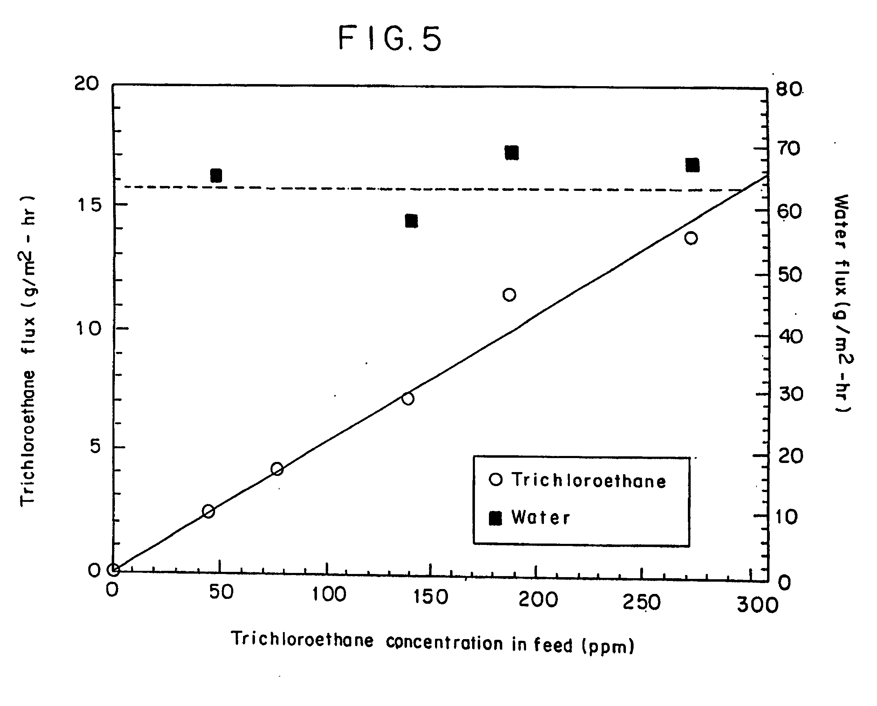

As shown in Figures 4 and 5, trichloroethane flux increased linearly with feed concentration for PEBA membranes filled with both activated carbon WPX and carbonaceous adsorbent Ambersorb 1500. The water fluxes were almost constant. The permeabilities calculated using the resistance-in-series model of equation (1) are listed in Table 4.

TABLE 4

| Removal of trichloroethane from water using adsorbent filled-membranes (30°C, feed flowrate 990 ml/min, downstream pressure 0,09 mmHg) | | | | |
|---|---|---|---|---|
| Membrane | PEBA | PBCA5% | PBCA10% | PBCA5% |
| $Q_i{}^m$(mol-m/m$^2$-s-KPa) | $1.34\times10^{-9}$ | $1.82\times10^{-9}$ | $2.58\times10^{-9}$ | $1.69\times10^{-9}$ |
| percent change of $Q_i{}^m$(%) | | 36 | 92 | 26 |
| $Q_w{}^m$(mol-m/m$^2$-s-KPa) | $2.15\times10^{-8}$ | $2.57\times10^{-8}$ | $2.65\times10^{-8}$ | $2.81\times10^{-8}$ |
| percent change of $Q_w{}^m$(%) | | 19 | 23 | 31 |
| Intrinsic separation factor | 1742 | 1984 | 2720 | 1681 |
| percent change of sep. factor(%) | | 14 | 56 | -4 |

As can be seen from Table 4, trichloroethane permeability increased as the filler was added into the polymer matrix. The trichloroethane permeability increase was 36% and 26%. respectively, for PEBA membranes filled with 5 wt% of activated carbon and Ambersorb 1500. The improvement of trichloroethane permeability increased with the activated carbon loading. However, addition of the adsorbent filler also increased water permeability, 19% for the membrane filled with 5 wt% of activated carbon and 31% for the membrane filled with 5 wt% of Ambersorb 1500. The intrinsic separation factors were calculated according to equation (17)[4]:

$$\alpha^{intri} = \frac{Q_i{}^m \rho_L H'_i}{Q_w{}^m P_w{}^{sat}} \tag{17}$$

The intrinsic separation factor increased for the membrane filled with activated carbon. Almost no change occurred in the separation factor for membranes filled with Ambersorb 1500, as is shown in Table 4.

Trichloroethane Soroption Isotherms for Filled Membranes

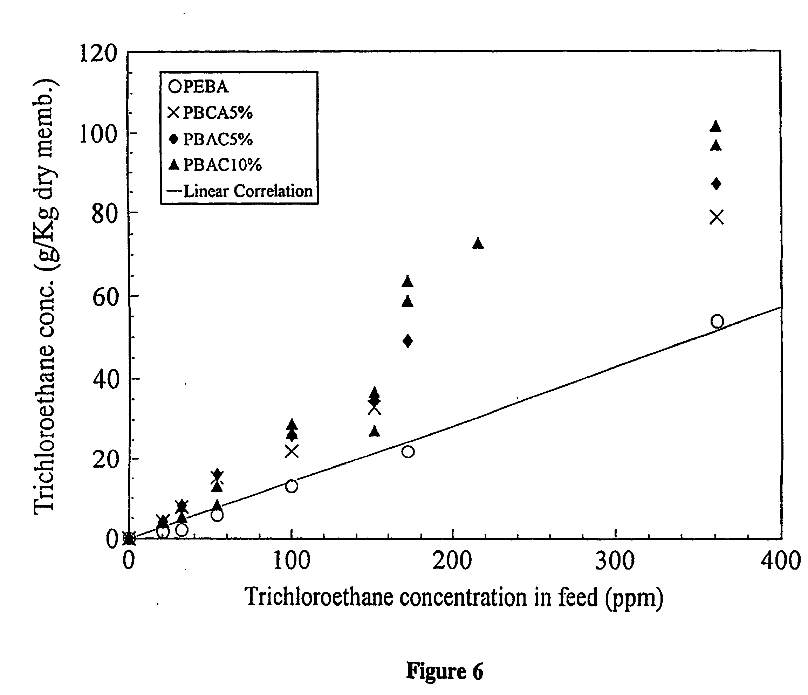

Pervaporation follows sorption-diffusion mechanisms. The permeation results can be discussed in terms of sorption and diffusion data measured independently. The sorption isotherms of filled PEBA membranes for dilute aqueous trichloroethane solution systems are shown in Figure 6. Clearly, the addition of hydrophobic adsorbents enhanced the trichloroethane sorption capacity of filled membranes. The enhancement of trichloroethane sorption increased with the activated carbon loading. The increase of trichloroethane permeability in the presence of adsorbents indicated that the trichloroethane desorption from the adsorbents in the membranes occurred under pervaporation conditions.

At low concentrations, trichloroethane sorption isotherms of PEBA membranes for dilute aqueous solutions can be described by the Henry's law of sorption, as follows:

$$C_i = K_i c_i \qquad (18)$$

As shown in Figure 6, the experimental data seem to follow a straight line described by equation (18) quite well at the concentration range studied, below 400 ppm. The partition coefficient $K_i$ was calculated to be 143.7 by fitting equation (18) to the experimental data (multiple correlation coefficient R=0.9945).

Filled membranes consist of two phases: a polymer phase and a sorbent phase. If C is the total concentration of organics and water in the filled membrane (mol/m$^3$ membrane), the following equation can be written:

$$C = C'_m + C'_A = C_m V_m + C_A V_A \qquad (19)$$

Here, C'$_m$ and C'$_A$ are concentrations in polymer phase and sorbent phase (expressed as mol/m$^3$ filled membrane), respectively. $C_m$ and $C_A$ have the same meaning as C'$_m$ and C'$_A$ but different units, which are mol/m$^3$polymer and mol/m$^3$ filler, respectively.

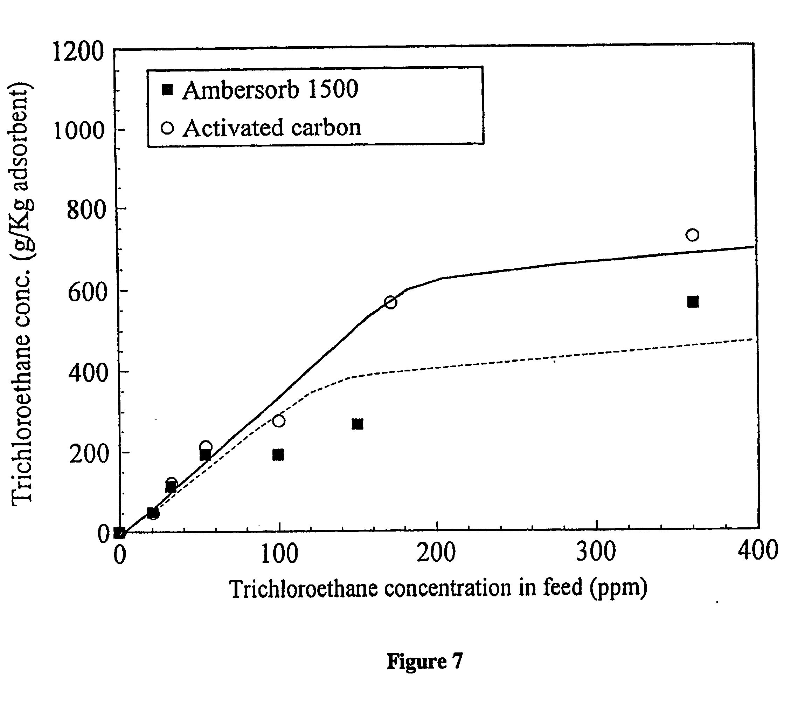

Figure 7 shows the trichloroethane sorption isotherms of both activated carbon and Ambersorb 1500 embedded in PEBA membrane from dilute aqueous trichloroethane solutions. The isotherms were obtained by subtracting the solubility of trichloroethane in polymer phase from that in the filled membranes according to equation (19). These isotherms seemed to follow Type I sorption, i.e., trichloroethane concentration in the sorbent increased almost linearly with feed concentration at low concentration range. It reached a plateau at high feed concentration. The sorption of trichloroethane in Ambersorb 100 is similar to that of activated carbon at concentrations below 50 ppm. Activated carbon showed higher sorption capacity of trichloroethane at high concentration range.

The sorption isotherms of these adsorbents in the membranes were correlated by Langmuir equation as described by ecmation (20):

$$\frac{1}{n_i} = \frac{1}{a} + \left(\frac{b}{a}\right)\frac{1}{c_i}$$

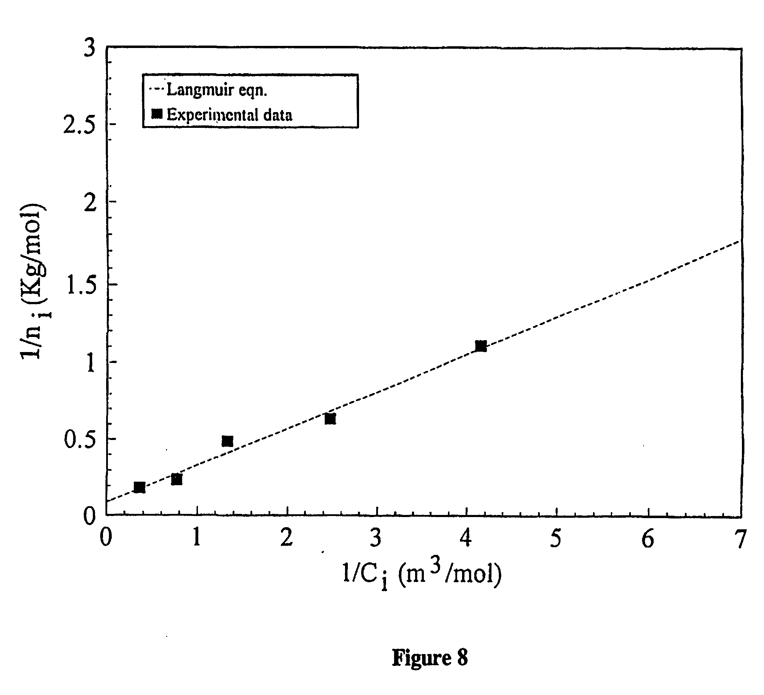

where $n_i$ is the amount of solute sorbed (mol/kg) and a and b are constant. The Langmuir equation describes a monolayer adsorption. The first adsorbed layer does not act as a substrate for adsorption by further layers. A plot of l/$n_i$ vs l/$c_i$ is shown in Figure 8. As can be seen from this figure, the isotherm of activated carbon can be represented quite well by the Langmuir equation. A similar result was obtained for Ambersorb 1500.

Sorption of Water into Filled Membranes

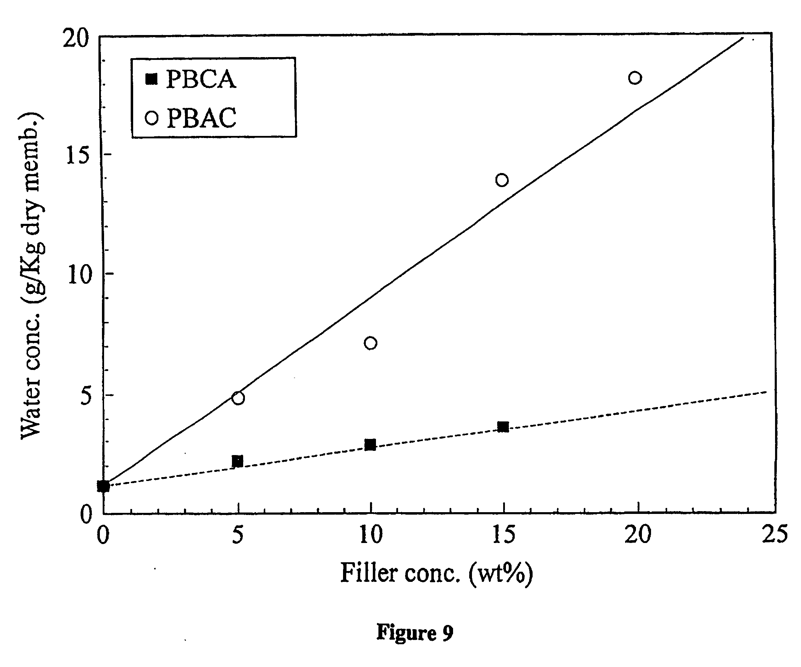

Sorption of water into filled PEBA membranes is shown in Figure 9. It can be seen from this figure that the amount of water sorbed by a filled membrane increased with the filler concentration in the membrane. The swelling for hydrophobic PEBA membrane due to sorption is small (0.001 g/g dry membrane). Sorption of water on activated carbon and Ambersorb are 0.1 g/g and 0.04 g/g, respectively. Therefore, the amount of water sorbed by the filled membrane is more than that without fillers. The increase of water sorption resulted in the increase of water permeability of the filled membranes.

Diffusion of Trichloroethane and Water Mixture through Filled Membranes

Diffusion of species in the adsorbent-filled membrane is complicated. It may occur by several different mechanisms:

(1) diffusion through the polymer phase;
(2) diffusion through pores of the adsorbent;
(3) sorption on the adsorbent surface;
(4) surface diffusion in adsorbent; and
(5) desorption from the adsorbent.

Some molecules may transport through the filled membrane by mechanism (1) only, while other may follow complicated mechanisms from (1) to (5).

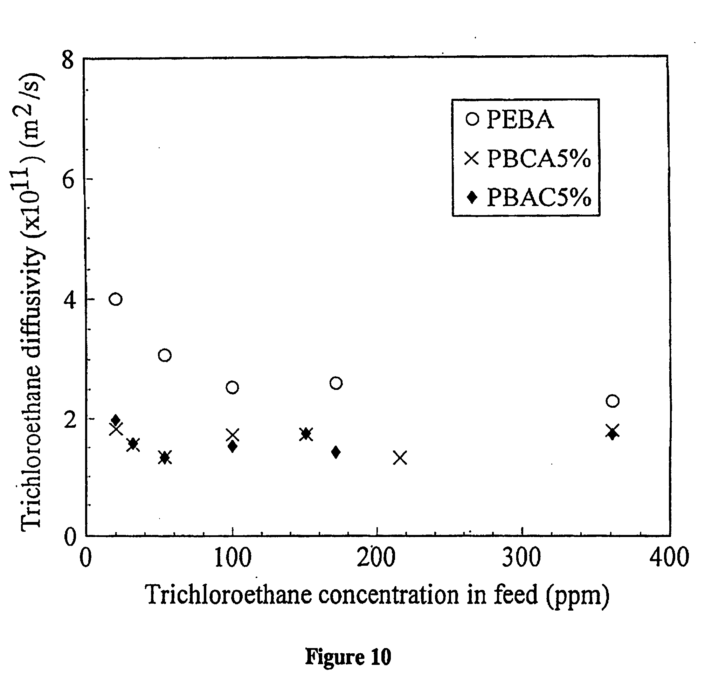

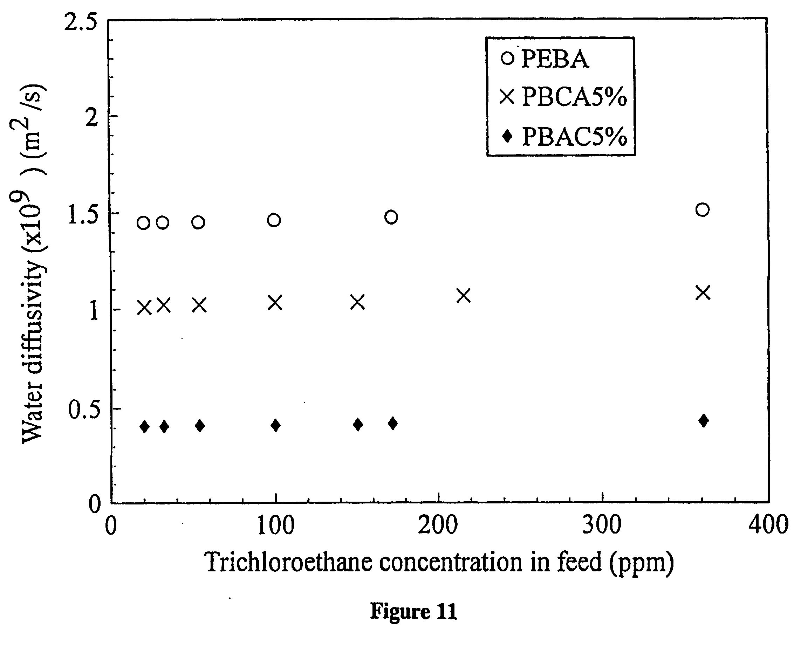

Figure 10 and 11 show the diffusivities of both trichloroethane and water in the filled membranes. The diffusivities were calculated using the measured flux and sorption data by equations (11) and (12). The average values are listed in Table 5.

Table 5.

| Average Diffusivities, $D_{av}$, of trichloroethane and water and effective diffusivities at zero concentration, $D^0$, through adsorbent filled membranes at 30°C | | | | |
|---|---|---|---|---|
| membranes | PEBA | PBAC5% | PBAC10% | PBCA5% |
| $D_{av}$ (trichloroethane) ($m^2$/s) | $3.25 \times 10^{-11}$ | $1.60 \times 10^{-11}$ | $2.37 \times 10^{-11}$ | $1.60 \times 10^{-11}$ |
| $D^0$ (trichloroethane) ($m^2$/s) | $1.37 \times 10^{-11}$ | $1.30 \times 10^{-11}$ | $1.16 \times 10^{-11}$ | $1.34 \times 10^{-11}$ |
| $D_{av}/D^0$ (trichloroethane) | 2.37 | 1.23 | 2.04 | 1.20 |
| $D_{av}$(water)($m^2$/s) | $1.46 \times 10^{-9}$ | $4.15 \times 10^{-10}$ | $2.94 \times 10^{-10}$ | $1.03 \times 10^{-9}$ |
| $D^0$(water)($m^2$/s) | $8.55 \times 10^{-11}$ | $6.29 \times 10^{-11}$ | $5.47 \times 10^{-11}$ | $8.00 \times 10^{-11}$ |
| $D_{av}/D^0$(water) | 17.1 | 6.59 | 5.37 | 12.9 |

As shown in Figures 10 and 11, the presence of an adsorbent decreased both trichloroethane and water diffusivities. This may be due to the existence of the dead-end pores in the adsorbents. If the adsorbent is inert and completely impermeable, the decrease of the diffusivity is mainly due to the tortuosity influence. In this case, the reduction in diffusivity for both trichloroethane and water would be the same, as described by the following equation (19):

$$\frac{D_{m0} - \bar{D}}{D_{m0}} = 1 - \kappa \qquad (21)$$

where $D_{m0}$ is the solute diffusivity in pure polymeric membrane, 5 is the effective diffusivity in the filled membrane, and $\kappa$ is the tortuosity factor which reflects the decrease of diffusing area and the increase of the diffusing path. In fact, trichloroethane diffusivity was reduced by 53% for PEBA membrane filled with 5 wt% activated carbon, while water diffusivity was reduced by 72%. This implies that the transport of trichloroethane and water occurred not only through the polymer phase in the filled membrane, but also through the microporous structure of the adsorbent, i.e., the surface of the adsorbent.

Water diffusivity decreased more than trichloroethane diffusivity. There may be two reasons for this behavior. First, due to the hydrophobicity of the filler surface, water diffusion was hindered through the surface or micropores. Water molecules must diffuse through the polymer phase and large pores. Micropores occupy one half the total pore volume measured by nitrogen adsorption experiments in activated carbon, as shown in Table 1. Most active sites in the micropores are occupied by the organic compounds such as trichloroethane, which may exclude water transport through these pores. Further, in activated carbon, water might be bound to the oxide functional group due to chemisorbed oxygen. These water molecules become secondary adsorption centers, which strongly retain other water molecules passing the site by hydrogen bonding [20].

Water diffusivity decreased more for PEBA membrane filled with activated carbon (72%) than with Ambersorb 1500 (30%). In Ambersorb 1500, the macro- and meso-pores are dominant in the total pore volume (cf. Table 1). The pore volume of macro- and meso-pores in Ambersorb 1500 was twice as large as that in activated carbon. Diffusion in the macropores (larger than 50 nm) and some mesopores (2-50 nm) follows Knudsen diffusion under pervaporation conditions (low pressure) where collisions between the diffusion species and the pore wall occur more frequently than collisions between the diffusion species. Knudsen diffusivity for water in porous structures is much higher than water diffusivity in polymer. For example, for 20 nm straight pores, Knudsen diffusivity for water is three orders of magnitude higher than water diffusivity in PEBA membrane.

The reduction of trichloroethane diffusivity for both membranes filled with activated carbon and Ambersorb 1500 are similar, 53% for the membrane with 5 wt% of activated carbon and 47% for that with 5 wt% of Ambersorb 1500. Though less porous than Ambersorb 1500, activated carbon has higher sorption capacity, which enhanced the surface diffusion. It has been shown by other workers in this field that the surface diffusion coefficient increases with the concentration in the sorbed phase due to a lower sorption energy [21-24].

According to the theory of Flory and Huggins [25, 26], a swollen membrane can be modeled as a homogeneous liquid mixture consisting of polymer and permeants. This idea was extended to swollen adsorbent-filled membranes. The results obtained from the sorption experiments in aqueous solution can be used as a first approximation to explain the transport of organic compounds in the adsorbent-filled membranes. For aqueous sorption on activated carbon, the following equation was proposed by Sudo et al. [21] to describe the relation between the surface diffusivity and the sorption capacity:

$$D_s = D_{s0} \exp (a'q_\infty) \qquad (21)$$

where $q_\infty$ is the amount of organic adsorbed at equilibrium, $D_{s0}$ is the surface diffusivity at $q_\infty=0$, and a' is constant. The surface diffusion appeared to be dominant in the organic transport through the filler, while water transport occurred mainly through the pores of the filler. These findings also agreed well with the results reported by Suzuki and Kwazoe [21]. In the study of sorption of fifteen different kinds of volatile organic compounds on activated carbon from dilute aqueous solution, they found that the surface diffusion dominated the rate of adsorption.

Diffusion of Liquid through Filled Membranes

To investigate further the diffusion of trichloroethane and water in filled membranes, diffusivities of both trichloroethane and water at zero concentration in PEBA and their sorbent-filled membranes were determined by desorption experiment. If the diffusion process is Fickian, according to equation (16), a plot of $\ln[(W_t-W_\infty)/(W_0-W_\infty)]$ against t would approach a straight line for long duration desorption. The diffusion of a gas or liquid in elastomeric polymers is generally a Fickian process (11). Figure 12 shows the desorption data for adsorbent-filled PEBA membranes. The experimental data can be represented by equation (16) very well, which indicated that a Fickian diffusion is also the rate-controlling step in these filled membrane systems. The diffusivity at zero concentration $D^0$ calculated by this method can be regarded as an effective diffusion coefficient for the filled membrane system.

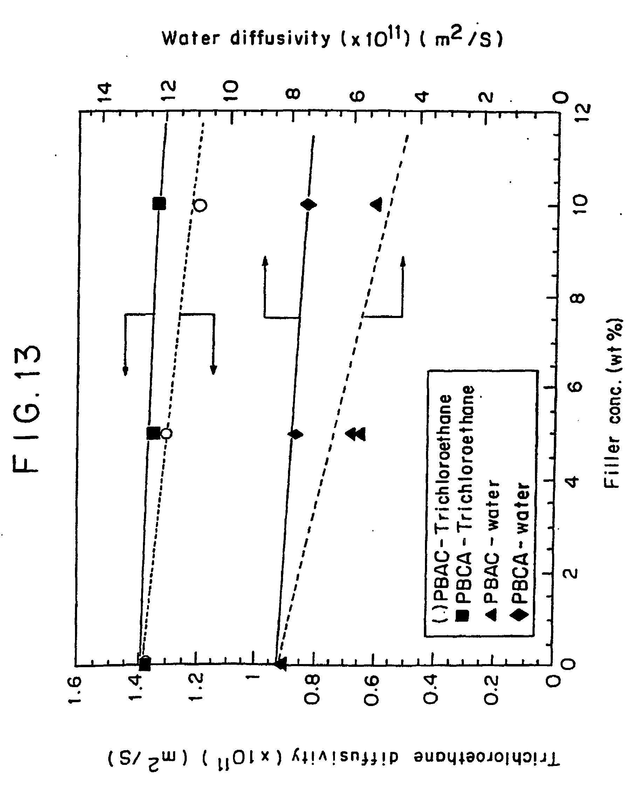

The diffusion coefficients of trichloroethane and water at zero concentration in PEBA membranes filled with activated carbon and Ambersorb 1500 were shown in Figure 13. Both trichloroethane and water diffusivities in filled membranes decreased with the filler loading. Water diffusivity decreased more for the membranes filled with activated carbon than that with Ambersorb 1500. The effect of the filler on trichloroethane diffusivity was less pronounced than that on water diffusivity. These results obtained from the direct diffusivity measurements agreed well with those calculated from permeation results. The average values of both trichloroethane and water diffusivities obtained by permeation measurement, and diffusivities at zero concentration determined by desorption experiments are listed in Table 5.

Trichloroethane diffusivities in permeation experiments were about 0.2 to 1.4 times higher than that at zero concentration as determined by desorption experiment. This difference between average diffusivity and diffusivity at zero concentration implies the effect of trichloroethane concentration on diffusivity. The increase of trichloroethane diffusivity may be caused by the swelling of the polymer phase and enhancement of the surface diffusion. The concentration effect was more obvious for water diffusivity. As shown in Table 5, water diffusivities in permeation experiments were almost 4 to 14 times higher than water diffusivities at zero concentration. The swelling of polymer by trichloroethane also increased the water diffusivity. Another source for this difference may be the error involved in the water sorption measurement due to the very small sorption of water in these hydrophobic membranes.

**Conclusions**

As can be seen from the above experimental evidence, addition of hydrophobic adsorbents into a polymer matrix membrane increased the sorption capacity of the resulting membranes for trichloroethane. Trichloroethane permeability was also enhanced. Both trichloroethane and water diffusivity decreased in the filled membranes. Water permeability increased for all filled membranes due to the increase of water sorption. The intrinsic separation factor increased for membranes filled with activated carbon, and was almost unchanged for membranes filled with Ambersorb 1500.

Transport of volatile organic compounds and water through filled membranes occurred not only in the polymer phase but also in the pores and surfaces of the microporous filler. Surface diffusion is dominant in the organic transport, and pore diffusion is dominant in water transport.

Sorption of volatile organic compounds on filled membranes from dilute aqueous solution can be describe by a combination of Henry's law and the Langmuir sorption equations. The capacity of both adsorbents to adsorb volatile organic compounds was higher than that of the PEBA polymer. The sorption of volatile organic compounds into the filled membranes outweighs the decrease in diffusivity and increase in organic permeability in filled membranes.

The membranes of the present invention optimize the pervaporation of volatile organic compounds, thus providing an improved method of treating wastewater to remove volatile organic compounds therefrom.

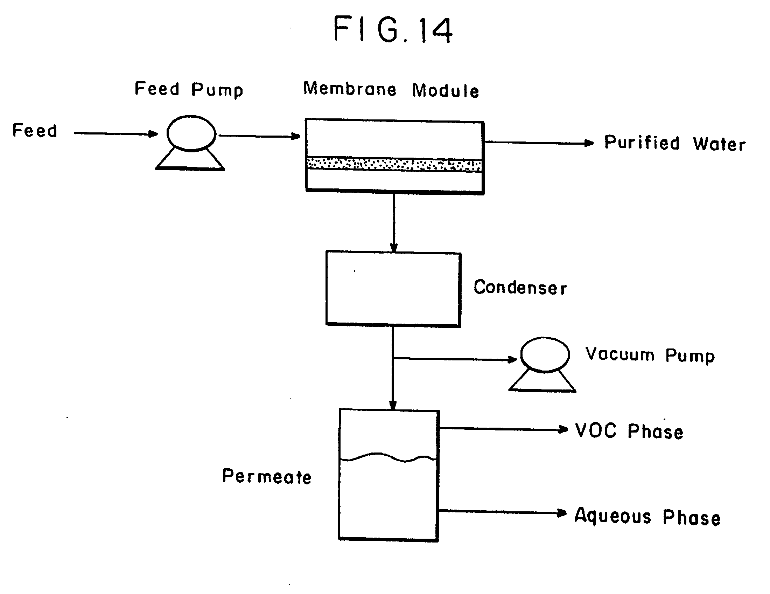

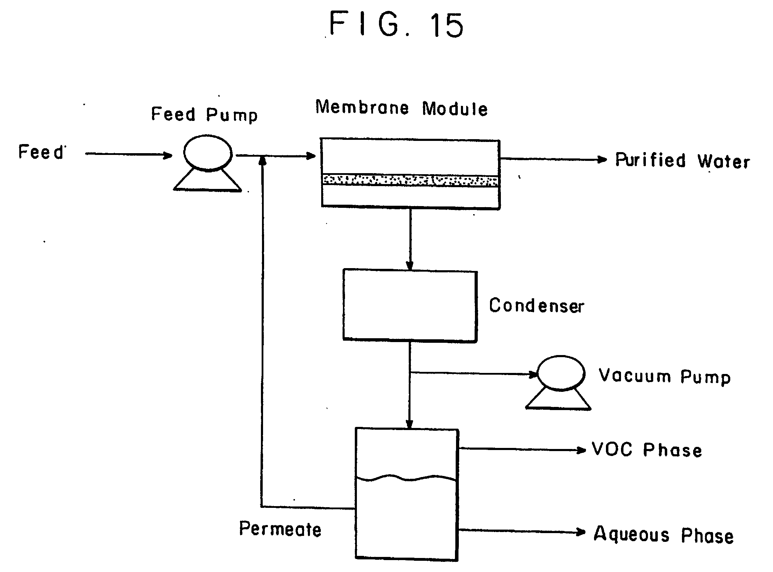

Volatile organic compounds can be removed by pervaporation according to the present invention by using one of two process configurations. The volatile organic compounds can be removed in a single stage without recycle of the permeate, as shown in Figure 14, and in a single stage with permeate recycle, as shown in Figure 15.

The permeate is normally two-phase: a volatile organic compound phase and a saturated aqueous phase in equilibrium with the volatile organic compound phase. In the first configuration, shown in Figure 14, the aqueous permeate is pumped to a post-treatment station. In the second configuration, shown in Figure 15, the aqueous phase of the permeate is recycled to the feed for reprocessing. The choice between these two configurations depends on the following factors: the cost for post-treating the permeate aqueous phase and the value of the recovered solvent. If the post treatment is inexpensive and the recovered solvents are inexpensive, the first configuration may be the preferred configuration, since less membrane area and feed pumping power are required. However, if the post-treatment is expensive or the recovered solvents are valuable, then the second configuration would be better than the first one. Room temperature operation is preferred because of the large volume of wastewater to be treated.

1. A. C. Larson, "Sizing Environmental Activated Carbon Adsorption Systems", presented at AIChE 1992 annual meeting, Miami Beach, Fla., Nov. 1-6, 1992.

2. E. G. Isacoff; Stephanie M. B. and G. R. Parker, Jr., "The Removal of Regulated Compounds from Groundwater and Wastewater Using Ambersorb 563 Carbonaceous Adsorbent", presented at AIChE 1992 annual meeting Miami Beach, Fla., Nov. 1-6, 1992.

3. G. R. Parker Jr. and Stephanie M. Bortko, "Groundwater Remediation Using Ambersorb Adsorbents", presented at the Florida Environmental Chemistry Conference, Oct. 30-Nov. 1, 1991.

4. W. Ji, S. K. Sikdar and S.-T. Hwang, "Modeling of Multicomponent Pervaporation for Removal of Volatile Organic Compounds from Water", *J. Membrane Sci.*, 93 (1994) 1-19.

5. H. J. C. Te Hennepe, D. Bargeman, M. H. V. Mulder and C. A. Smolders, "Zeolite-Filled Silicone Rubber Membranes", *J. Membrane Sci.*, 35 (1987) 39.

6. M. Goldman, D. Frankel and G. Levin, "A Zeolite/Polymer Membrane for the Separation of Ethanol Water Azeotrope", *J. Appl. Polymer. Sci.* 37 (1989) 1791.

7. M. Jia, K.-V Peineman and R.-D. Behling, "Molecular Sieving Effect of the Zeolite-Filled Silicone Rubber Membranes in Gas Permeation", *J. Membrane Sci.,* 57 (1991) 289-296.

8. J. M. Duval, B. Folkers, M. H. V. Mulder, G. Desgrandchamps and C. A. Smolders, "Adsorbent Filled Membranes for Gas Separation. Part 1. Improvement of Gas Separation Properties of Polymeric Membranes by Incorporation of Microporous Adsorbents", *J. Membrane Sci.,* 80 (1993) 189-198.

9. H. J. C. Te Hennepe, C. A. Smolders, D. Bargeman and M. H. V. Mulder, "Exclusion and Tortuosity Effects for Alcohol/Water Separation by Zeolite-Filled PDMS Membranes", *Sep. Sci. Tech.,* 26 (4) (1991) 585-596.

10. L. Cussler, "Membranes Containing Selective Flakes", *J. Membrane Sci. 52* (1990) 275-288.

11. J. Crank and G. S. Park, *Diffusion in Polymers,* Academic Press, New York (1968).

12. Rohm and Hass Company, "Ambersorp Carbonaceous Adsorbents, Technical Notes, 1992.

13. K. W. Boddeker and G. Bengtson, "Pervaporation of Low Volatility Aromatics from Water", *J. Membrane Sci.* 53 (1990) 143.

14. R. Raghunath and S.-T. Hwang, "Effect of Boundary Layer Mass Transfer Resistance in the Pervaporation of Dilute Organics", *J. Membrane Sci.,* 65 (1992a) 147.

15. M. H. V. Mulder, T. Franken and C. A. Smolders, "Preferential Sorption Versus Preferential Permeability in Pervaporation", *J.* Membrane *Sci.,* 22 (1985) 155-173.

16. H.H. Nijhuis, *Removal of Trace Organics form Water by Pervaporation. (A Technical and Economic Analysis),* Ph. D. Thesis, University of Twente, Enschede, The Netherlands (1990)

17. B. K. Dutta and S. K. Sikdar, "Separation of Azeotropic Organic Liquid Mixtures by Pervaporation", *AIChE J.,* 37 (4) (1991) 581-588.

18. J. P. Brun, C. Larchet, R. Merlet and G. Bulvestre, "Sorption and Pervaporation of Dilute Aqueous Solutions of Organic Compounds Through Polymer Membranes", J. *Membrane Sci.,* 23 (1985) 257.

19. G. J. Van Amerongen, *Rubber Chem. Tech.,* 37, (1964) 1065.

20. M. M. Dubinin, "Porous Structure and Adsorption Properties.of Active Carbons" in *Chemistry and Physics of Carbon,* P. J. Walker, Ed., Vol. 2, Dekkeer, New York 1965, p. 51.

21. Y. Sudo, D. M. Mist and M. Suzuki, "Concentration Dependence of Effective Surface Diffusion Coefficients in Aqueous Phase Adsorption on Activated Carbon", *Chem. Eng. Sci.,* 33 (1978) 1287.

22. M. Suzuki and T. Fujii, "Concentration Dependence of Surface Diffusion Coefficient of Propionic Acid in Activated Carbon Particles", *AIChE J.;* 28 (3) (1982) 380.

23. M. Muraki, Y. Iwashima and T. Hayakawa, "Rate of Liquid-Phase Adsorption on Activated Carbon in the Stirred Tank", J. *Chem. Eng. Japan,* 15 (1) (1982) 34.

24. A. Siedel and P. S. Carl, *Chem. Eng. Sci.,* 44 (1989) 189.

25. P. J. Flory, *J. Chem. Phys.*, 9 (1941) 660.

26. M. L. Huggins, *J. Chem. Phys.,* 9 (1941) 440.

27. M. Suzuki and Kawazoe, "Effective Surface Diffusion Coefficients of Volatile Organics on Activated Carbon During Adsorption from Aqueous Solution, *J. Chem. Eng. Japan*, 7 (1974) 346.

**Claims**

1. A membrane for pervaporation of volatile organic compounds from water comprising a polymeric membrane filled with a least one hydrophobic adsorbent **characterized in that** the hydrophobic adsorbent has a surface area of at least 900m$^2$/g.

2. A membrane according to claim 1 **characterized in that** the hydrophobic adsorbent is present in an amount ranging from 1 wt% to 25 wt% of the total membrane.

3. A membrane according to claim 1 or 2 **characterized in that** the polymeric membrane is made of a rubbery polymer selected from the group consisting of polydimethyl siloxanes, poly(1-trimethylsiliyl-1-propyne), polyurethanes, polybutadiene, polyether-block-polyamides, and silicon-polycarbonates, styrene butadiene rubber, nitrile butadiene rubber, ethene-propene terpolymer.

4. A membrane according to any one of the preceding claims **characterized in that** the hydrophobic adsorbent is selected from the group consisting of activated carbon, carbonaceous absorbents made by polymer pyrolysis, zeolites, hydrophobic molecular sieves, hydrophobic polymer resins, and mixtures thereof.

5. A method for removing volatile organic compounds from wastewater containing volatile organic compounds **characterized in that** wastewater is feed to a membrane according to any one of the claims 1-4 and removing volatile organic compounds which have permeated through the membrane.

6. A method according to claim 5 **characterized in that** after the wastewater has been fed through the membrane the aqueous phase of the permeate is pumped to a post-treatment station.

7. A method according to claim 5 **characterized in that** after the wastewater has been fed through the membrane the aqueous phase of the permeate is recycled to the feed for reprocessing.

**Patentansprüche**

1. Membran zur Pervaporation von flüchtigen organischen Verbindungen aus Wasser, die eine mit wenigstens einem hydrophoben Adsorbens gefüllte polymere Membran umfasst, **dadurch gekennzeichnet, dass** das hydrophobe Adsorbens eine Oberfläche von wenigstens 900 m$^2$/g hat.

**2.** Membran gemäß Anspruch 1, **dadurch gekennzeichnet, dass** das hydrophobe Adsorbens in einer Menge im Bereich von 1 bis 25 Gew.-% der Gesamtmembran vorhanden ist.

**3.** Membran gemäß Anspruch 1 oder 2, **dadurch gekennzeichnet, dass** die polymere Membran aus einem kautschukartigen Polymer hergestellt ist, ausgewählt aus der Gruppe, die aus Polydimethylsiloxanen, Poly(1-trimethylsilyl-1-propin), Polyurethanen, Polybutadien, Polyether-Block-Polyamiden, Silicon/Polycarbonaten, Styrol-Butadien-Kautschuk, Nitril-Butadien-Kautschuk und Ethen-Propen-Terpolymer besteht.

**4.** Membran gemäß einem der vorhergehenden Ansprüche, **dadurch gekennzeichnet, dass** das hydrophobe Adsorbens aus der Gruppe ausgewählt ist, die aus Aktivkohle, durch Polymerpyrolyse hergestellten kohlenstoffhaltigen Adsorbentien, Zeolithen, hydrophoben Molekularsieben, hydrophoben Polymerharzen und Mischungen daraus besteht.

**5.** Verfahren zur Entfernung flüchtiger organischer Verbindungen aus Abwasser, das flüchtige organische Verbindungen enthält, **dadurch gekennzeichnet, dass** Abwasser einer Membran gemäß einem der Ansprüche 1-4 zugeführt wird und flüchtige organische Verbindungen, die durch die Membran gedrungen sind, entfernt werden.

**6.** Verfahren gemäß Anspruch 5, **dadurch gekennzeichnet, dass** die wässrige Phase des Permeats, nachdem das Abwasser durch die Membran geführt wurde, zu einer Nachbehandlungsstation gepumpt wird.

**7.** Verfahren gemäß Anspruch 5, **dadurch gekennzeichnet, dass** die wässrige Phase des Permeats, nachdem das Abwasser durch die Membran geführt wurde, zur Zufuhr zur Wiederaufbereitung recycliert wird.

**Revendications**

**1.** Membrane pour pervaporation de composés organiques volatils des eaux comprenant une membrane polymère remplie d'au moins un adsorbant hydrophobe, **caractérisée en ce que** l'adsorbant hydrophobe présente une étendue de surface d'au moins 900 m$^2$/g.

**2.** Membrane selon la revendication 1, **caractérisée en ce que** l'adsorbant hydrophobe est présent dans une quantité de l'ordre de 1 pour cent en poids à 25 pour cent en poids de la membrane entière.

**3.** Membrane selon la revendication 1 ou 2, **caractérisée en ce que** la membrane polymère est faite d'un polymère élastique choisi du groupe composé de polydiméthylsiloxanes, poly(1-triméthylsiliyl-1-propyne), polyuréthanes, polybutadiène, polyéther-bloc-polyamides, et polycarbonates de silicium, caoutchouc de butadiène et styrène, caoutchouc de butadiène et nitrile, ter-polymère d'éthène-propène.

**4.** Membrane selon l'une quelconque des revendications précédentes, **caractérisée en ce que** l'adsorbant hydrophobe est choisi du groupe composé de charbon activé, absorbants carbonés préparés par pyrolyse de polymères, zéolites, tamises moléculaires hydrophobes, résines polymères hydrophobes et des mélanges de ceux-ci.

**5.** Procédé pour éliminer des composés organiques volatils des eaux usées contenant des composés organiques volatils, **caractérisé en ce que** des eaux usées sont amenées à une membrane selon l'une quelconque des revendications 1-4 et éliminant des composés organiques volatils qui sont passés à travers la membrane.

**6.** Procédé selon la revendication 5, **caractérisé en ce qu'**après que les eaux usées ont été amenées à travers la membrane, la phase aqueuse du filtrat est pompée à une station de traitement ultérieur.

**7.** Procédé selon la revendication 5, **caractérisé en ce qu'**après que les eaux usées ont été amenées à travers la membrane, la phase aqueuse du filtrat est recyclée au conduit d'alimentation pour récupération.

# F I G . 1

# FIG. 2

Heat

Membrane
Sample

Sample
Container

He + water
+ Tricloroethane

Purge Gas, He

Carrier Gas, He

Adsorbent
Trap

He + water
+ Tricloroethane  To GC

Vent

Purge Gas, He

Cahn 1100 Pressure Balance — T, P, W — Data Acquisition Unit — Computer — Tare — Vacuum Pump — Membrane Sample — Thermal Water Bath

**Figure 3**

# FIG. 4

# FIG.5

Trichloroethane flux ( g/m² - hr )

Water flux (g/m² -hr )

○ Trichloroethane
■ Water

Trichloroethane concentration in feed (ppm)

EP 0 839 071 B1

EP 0 839 071 B1

**Figure 6**

**Figure 7**

EP 0 839 071 B1

**Figure 8**

Water conc. (g/Kg dry memb.)

Filler conc. (wt%)

PBCA
PBAC

**Figure 9**

Figure 10

**Figure 11**

EP 0 839 071 B1

**Figure 12**

FIG.13

# FIG.14

Feed → Feed Pump → Membrane Module → Purified Water

Condenser

Vacuum Pump

Permeate → VOC Phase

→ Aqueous Phase

EP 0 839 071 B1

# FIG. 15

Feed ⟶ Feed Pump ⟶ Membrane Module ⟶ Purified Water

Condenser

Vacuum Pump

VOC Phase

Permeate

Aqueous Phase

EP 0 839 071 B1

Fig.16 Test unit for pervaporation process. 1. feed tank, 2. feed pump, 3. isothermal bath, 4. heating coil, 5. membrane cell, 6. pressure meter, 7. valve, 8. cold trap, 9. dryer, 10. vacuum pump, 11. immersion circulator-heater-controller, 12. thermocouple, 13. thermometer, 14.flowmeter, 15. needle valve

EP 0 839 071 B1